(19) Europäisches Patentamt
European Patent Office
Office européen des brevets

(11) **EP 4 657 705 A1**

(12) **EUROPEAN PATENT APPLICATION**

(43) Date of publication:
**03.12.2025 Bulletin 2025/49**

(21) Application number: **24196454.3**

(22) Date of filing: **26.08.2024**

(51) International Patent Classification (IPC):
**H02J 7/00** (2006.01)   **H01M 10/44** (2006.01)
**H01M 10/48** (2006.01)

(52) Cooperative Patent Classification (CPC):
**H02J 7/0063; H01M 6/50; H02J 7/0048;
H02J 7/00714; H02J 7/007182; H02J 7/007186**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.05.2024   CN 202410687398**

(71) Applicant: **FuturePulse Investment Co., Ltd.
Guangzhou Guangdong 510507 (CN)**

(72) Inventor: **LI, Wenjie
Guangzhou 510507 (CN)**

(74) Representative: **Metida
Gyneju str. 16
01109 Vilnius (LT)**

(54) **BATTERY DISCHARGE CONTROL DEVICE AND METHOD**

(57)    The present disclosure relates to a battery discharge control device and method. The device includes a battery (10), a discharge current sampling unit (30), an MCU (20), a DC-DC voltage step-down unit (40), a battery protection board (50), an indicator light (60) and a charging control unit (70). According to the present disclosure, the discharge current value, on-load voltage value and no-load voltage value of the battery are acquired by means of the MCU, the battery remaining capacity is calculated according to the above discharge current value, on-load voltage value and no-load voltage value, and finally, the output of the DC-DC voltage step-down unit is controlled according to the battery remaining capacity; and therefore, by adjusting the final power supply output of the device, the power supply output of the battery changes with the discharge trend of a lithium battery, electrical equipment can be enabled to obtain stable input, and the battery power can be accurately quantified.

Fig. 1

EP 4 657 705 A1

## Description

## TECHNICAL FIELD

The present disclosure relates to the technical field of battery devices, in particular to a battery discharge control device and method.

## BACKGROUND

A dry battery, also known as a primary battery, is a type of voltaic battery using a certain absorbent (such as wood chips or gelatin) to make the inclusions into a paste that will not overflow. It is commonly used as a power source for a flashlight for lighting, a radio, or the like. Due to the huge number of dry batteries remaining in China, they are still widely used in various electrical equipment at present.

The invention patent with application number CN 202210200743.8 discloses a lithium battery circuit, device and method for following the discharge of dry batteries. It is mentioned that the control circuits of some specific types of electrical equipment gradually reduce the duty cycle of circuit output voltage according to a preset dry battery discharge following curve. However, due to the non-linear change of the output voltage attenuation process in the discharge process of ordinary dry batteries, there is a phenomenon of virtual electricity; moreover, the estimation of battery power by electrical equipment is mostly displayed according to ideal linear changes; and therefore, the electrical equipment are prone to power supply instability and inability to accurately quantify battery power. As a result, how to implement a battery discharge control system that can overcome the defect that the voltage output process of a dry battery is not linear enough, resulting in unstable power supply for electrical equipment and inability to accurately quantify battery power has become an urgent problem to be solved.

## SUMMARY

In view of this, it is necessary to provide a battery discharge control device to solve the above-mentioned problems in the prior art.

In order to solve the above problem, the present disclosure provides a battery discharge control device, including:

a battery, connected to an MCU and a DC-DC voltage step-down unit separately, for outputting electrical energy;
a discharge current sampling unit, connected to the MCU, for acquiring the discharge current value, on-load voltage value and no-load voltage value of the battery and transmitting same to the MCU;
the MCU, used for calculating the battery remaining capacity according to the discharge current value, on-load voltage value and no-load voltage value, and sending a power supply adjustment signal according to the remaining capacity; and
the DC-DC voltage step-down unit, connected to the battery and the MCU separately, for adjusting the final power supply output of the device according to the power supply adjustment signal sent by the MCU.

Preferably, the battery discharge control device further includes a battery protection board, where one end of the battery protection board is connected to the battery, and the other end of the battery protection board is connected to the DC-DC voltage step-down unit.

Preferably, the battery discharge control device further includes an indicator light and a charging control unit, where the indicator light is connected to the MCU for indicating the battery power, one end of the charging control unit is connected to the battery protection board, and the other end of the charging control unit is connected to the MCU for controlling the charging of the battery.

On the other hand, the present disclosure also provides a battery discharge control method, including:

S1, calculating, according to the acquired discharge current value, on-load voltage value and no-load voltage value of the battery, the battery inner resistance value of the battery;
S2, calculating, according to the battery inner resistance value, the floating voltage value of the battery;
S3, calculating, according to the floating voltage value, the actual voltage value of the battery; and
S4, calculating, according to the actual voltage value and the floating voltage value, the battery remaining capacity, and adjusting the final power supply output of the device based on the remaining capacity.

Preferably, the step S1 specifically includes:

S1a, acquiring the discharge current value $I_{bat}$, on-load voltage value $U_0$ and no-load voltage value $U_1$ of the battery; and
S1b, inputting the discharge current value $I_{bat}$, on-load voltage value $U_0$ and no-load voltage value $U_1$ into the set first calculation formula to calculate the battery inner resistance value. The first calculation formula is specifically embodied as follows:

$$R_{bat} = \frac{U_1 - U_0}{I_{bat}}$$

where $R_{bat}$ is the battery inner resistance value.

Preferably, the step S2 specifically includes:

S2a, inputting the battery inner resistance value $R_{bat}$

and discharge current value $I_{bat}$ into the set second calculation formula to calculate the floating voltage value of the battery. The second calculation formula is specifically embodied as follows:

$$\Delta U = R_{bat} \times I_{bat}$$

where $\Delta U$ is the floating voltage value of the battery.

Preferably, the step S3 specifically includes:

S3a, inputting the on-load voltage value $U_0$ and floating voltage value $\Delta U$ into the set third calculation formula to calculate the actual voltage value. The third calculation formula is specifically embodied as follows:

$$U_{bat} = U_0 + \Delta U$$

where $U_{bat}$ is the actual voltage value.

Preferably, the step S4 specifically includes:

S4a, calculating the positive correlation between the actual voltage value $U_{bat}$ and the floating voltage value $\Delta U$;
S4b, determining, according to the positive correlation, the battery remaining capacity; and
S4c, converting the remaining capacity into the final power supply output of the circuit according to a set proportion.

Preferably, after the step S4, the method further includes:

S5, acquiring a preset current output upper limit value, the current output upper limit value being used to limit the discharge current value;
S6, when the difference between the discharge current value and the current output upper limit value is less than the first set threshold, determining that the discharge current value is approaching the current output upper limit value, and decreasing the voltage value of the final power supply output; and
S7, when the discharge current value exceeds the current output upper limit value, stopping the final power supply output.

Preferably, the step S6 specifically includes:

S6a, when the difference between the discharge current value and the current output upper limit value is less than the first set threshold, acquiring the cumulative time during which the difference is less than the first set threshold; and
S6b, when the cumulative time exceeds the second set threshold, determining that the discharge current value is approaching the current output upper limit value, and reducing the output voltage of the DC-DC voltage step-down unit, so as to decrease the voltage value of the final power supply output, and further prevent the device and electrical equipment from being overheated.

By adopting the above solutions, the beneficial effects are as follows:

According to the battery discharge control device and method provided by the present disclosure, the discharge current value, on-load voltage value and no-load voltage value of the battery are acquired by means of the MCU, the battery remaining capacity is calculated according to the above discharge current value, on-load voltage value and no-load voltage value, and finally, the output of the DC-DC voltage step-down unit is controlled according to the battery remaining capacity; and therefore, by adjusting the final power supply output of the device, the power supply output of the battery changes with the discharge trend of a lithium battery, electrical equipment can be enabled to obtain stable input, and the battery power can be accurately quantified, which solves the problem that non-linearly changing output voltage attenuation process of dry batteries in the prior art leads to unstable power supply for electrical equipment and inability to accurately quantify battery power, thus making the output of power supply equipment more linear.

**BRIEF DESCRIPTION OF THE DRAWINGS**

Fig. 1 is a schematic diagram of the structure of a battery discharge control device provided by the present disclosure;
Fig. 2 is a flow chart of a battery discharge control method provided by an embodiment of the present disclosure; and
Fig. 3 is a flow chart of a battery discharge control method provided by another embodiment of the present disclosure.

**DETAILED DESCRIPTION OF THE EMBODIMENTS**

Exemplary embodiments of the present disclosure are described in detail below with reference to the accompanying drawings, where the accompanying drawings constitute a part of the present application and are used together with the embodiments of the present disclosure to illustrate the principle of the present disclosure, which is not intended to limit the scope of the present disclosure.
Reference herein to "embodiments" means that particular features, structures, or characteristics described in conjunction with the embodiments may be included in at least one embodiment of the present application. The appearances of the phrase in various places of the description are not necessarily all referring to the same embodiment, nor are separate or alternative embodiments mutually exclusive of other embodiments. It is explicitly and implicitly understood by those skilled in the art that the embodiments described herein may be combined with other embodiments.

At present, most of the AA or AAA lithium batteries on the market are designed with a constant voltage of 1.5V, which are better in discharge performance in the early stage. However, when the battery power is close to depletion, the discharge curve will drop dramatically or even the power is suddenly cut off, which greatly affects the user experience. Moreover, constant voltage output will cause electrical equipment to operate at high power for a long time, easily leading to overheating damage to electrical equipment and a decrease in the service life of electrical equipment.

In view of this, the present disclosure designs a battery discharge control device with an average voltage of about 1.5V based on the advantage of the relatively linear voltage change during the charge and discharge processes of a lithium battery. The output voltage of the device changes linearly with the discharge characteristics of the lithium battery. The following will be described and introduced through a plurality of embodiments.

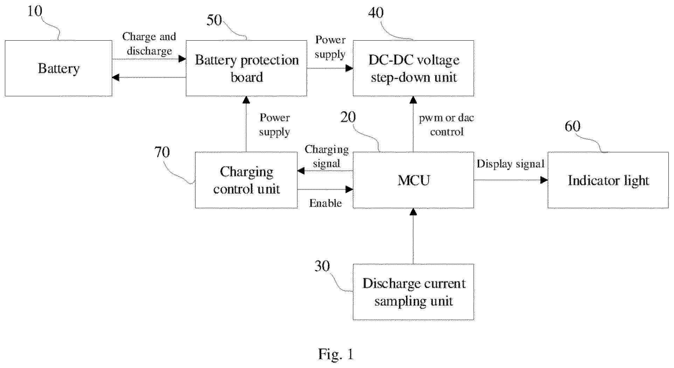

Fig. 1 is a schematic diagram of the structure of a battery discharge control device provided by the present disclosure. As shown in Fig. 1, the present disclosure provides a battery discharge control device, which includes:

a battery 10, connected to an MCU 20 (microcontroller unit) and a DC-DC (DC-to-DC converter) voltage step-down unit separately, for outputting electrical energy;
a discharge current sampling unit 30, connected to the MCU 20, for acquiring the discharge current value, on-load voltage value and no-load voltage value of the battery 10 and transmitting same to the MCU 20;
the MCU 20, used for calculating the battery 10 remaining capacity according to the discharge current value, on-load voltage value and no-load voltage value, and sending a power supply adjustment signal according to the remaining capacity; and
the DC-DC voltage step-down unit 40, connected to the battery 10 and the MCU 20 separately, for adjusting the final power supply output of the device according to the power supply adjustment signal sent by the MCU 20.

Specifically, referring to Fig. 1, after the battery discharge control device is adopted, during a discharging process, the MCU 20 controls the output voltage of the DC-DC voltage step-down unit 40 by changing the PWM (pulse width modulation) duty cycle. The MCU 20 can also control the DC-DC voltage step-down unit 40 through a DAC (digital to analog converter). Due to adoption of this circuit design, the device can ensure that the DC-DC voltage step-down unit 40 stably outputs a battery voltage of 0.9-1.7V.

Furthermore, the MCU 20 monitors the operation process of the battery discharge control device based on the battery discharge current obtained in real time and the input/output terminal voltage of the DC-DC voltage step-down unit 40 obtained by detection, so as to provide undervoltage, overcurrent, and overdischarge protection for the battery discharge control device.

In this embodiment, since the voltage change process of a lithium battery in the charge and discharge processes is relatively linear compared to other disposable batteries, the MCU 20 may detect the voltage during the charge and discharge processes of the lithium battery, so as to more accurately quantify the actual remaining capacity of the battery 10. On this basis, the present disclosure designs the battery discharge control device with an average voltage of about 1.5V, with the voltage varying linearly with the discharge characteristics of the battery, based on the advantage of the relatively linear voltage change during the charge and discharge processes of the lithium battery. The MCU 20 converts the battery output of the battery 10 into a battery output with an average voltage of 1.5V in a ratio of (3.6-3.7):1.5 according to the quantified electric quantity, and the voltage change trend changes with the natural discharge curve of the lithium battery.

The present disclosure controls the output of the DC-DC voltage step-down unit 40 according to the battery remaining capacity, and accordingly, by adjusting the final power supply output of the device, the power supply output of the battery 10 changes with the discharge trend of the lithium battery, electrical equipment can be enabled to obtain stable input, and the battery power can be accurately quantified, which solves the problem that non-linearly changing output voltage attenuation process of dry batteries in the prior art leads to unstable power supply for electrical equipment and inability to accurately quantify battery power, thus making the output of power supply equipment more linear.

The device follows the natural discharge curve of the lithium battery. Since the discharge curve of the lithium battery is approximately linear, the battery discharge control device will provide electrical energy within a relatively stable voltage range. This means that electrical equipment will not operate at high voltage and high power for a long time, nor will it be overheated or overloaded due to the unstable electrical energy provided by circuit devices.

Compared with the prior art, the battery discharge control device provided in the embodiments of the present disclosure has at least the following advantages:

1. The output voltage of the battery gradually decreases with the battery power during the discharge process, avoiding the cliff like power failure that occurs when the battery power of the traditional 1.5V constant voltage output battery is used out.

2. The existing electrical equipment without MCU, due to the lack of temperature control protection, needs to rely on the natural discharge curve of the traditional alkaline batteries for normal downshifting and cooling. The battery discharge control device designed according to the present disclosure whose output voltage gradually decreases with the battery power avoids equipment being in a high voltage and high power operation state for a long time, and has a certain over-temperature protection effect on these equipment.

3. For some devices with MCUs, due to the design of the present disclosure, external electrical equipment can be enabled to perform AD acquisition through output to the battery, and the remaining capacity of the device is finally quantified, which can not be achieved by the traditional AA lithium battery with constant voltage output.

In a preferred embodiment of the present disclosure, referring to Fig. 1, the battery discharge control device further includes a battery protection board 50, where one end of the battery protection board 50 is connected to the battery 10, and the other end of the battery protection board 50 is connected to the DC-DC voltage step-down unit 40.

Specifically, according to the present disclosure, the battery protection board 50 is disposed to protect the battery 10 at the hardware level, so as to ensure that the battery 10 is not affected by problems such as overdischarge, overcurrent and overvoltage during use, thereby guaranteeing the safety and stability of the battery 10.

In a preferred embodiment of the present disclosure, referring to Fig. 1, the battery discharge control device further includes an indicator light 60 and a charging control unit 70, where the indicator light 60 is connected to the MCU 20 for indicating the battery 10 power, one end of the charging control unit 70 is connected to the battery protection board 50, and the other end of the charging control unit 70 is connected to the MCU 20 for controlling the charging of the battery 10.

Specifically, the battery discharge control device is further provided with the indicator light 60. The indicator light 60 flashes slowly during charging, and the indicator light 60 is always on after the battery is fully charged. The indicator light 60 may also be configured to prompt the battery 10 power. In a process of connecting the battery 10 to a load, when the battery power is about to be used out, the indicator light 60 may also flash quickly to remind a user to replace or charge the battery 10 in time.

In addition, during charging, the charging control unit 70 may control the magnitude of the charging current inputted into the battery 10, thereby preventing the battery 10 from being damaged due to the excessive charging current.

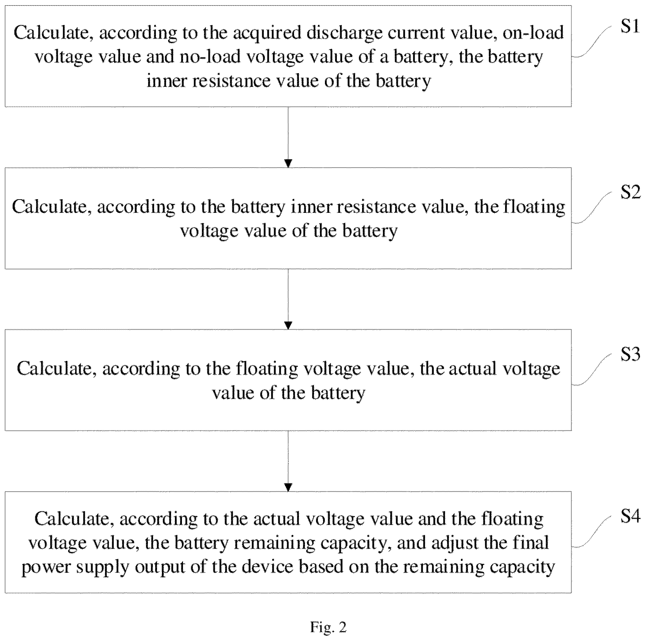

Fig. 2 is a flow chart of a battery discharge control method provided by an embodiment of the present disclosure. Referring to Fig. 2, the present disclosure provides a battery discharge control method based on the above-mentioned battery discharge control device, which includes at least:

Step S1, calculating, according to the acquired discharge current value, on-load voltage value and no-load voltage value of the battery, the battery inner resistance value of the battery.

As a preferred embodiment, the step S1 specifically includes:

S1a, acquiring the discharge current value $I_{bat}$, on-load voltage value $U_0$ and no-load voltage value $U_1$ of the battery by using the discharge current sampling unit; and

S1b, inputting the discharge current value $I_{bat}$, on-load voltage value $U_0$ and no-load voltage value $U_1$ into the MCU, and allowing the MCU to calculate the battery inner resistance value through the set first calculation formula. The first calculation formula is specifically:

$$R_{bat} = \frac{U_1 - U_0}{I_{bat}}$$

where $R_{bat}$ is the battery inner resistance value.

S2, calculating, according to the battery inner resistance value, the floating voltage value of the battery.

As a preferred embodiment, the step S2 specifically includes:

S2a, inputting the battery inner resistance value $R_{bat}$ and discharge current value $I_{bat}$ into the MCU, and allowing the MCU to calculate the floating voltage value of the battery through the set second calculation formula. The second calculation formula is specifically:

$$\Delta U = R_{bat} \times I_{bat}$$

where $\Delta U$ is the floating voltage value of the battery.

S3, calculating, according to the floating voltage value, the actual voltage value of the battery.

As a preferred embodiment, the step S3 specifically includes:

S3a, inputting the on-load voltage value $U_0$ and floating voltage value $\Delta U$ into the MCU, and allowing the MCU to calculate the actual voltage value through the set third calculation formula. The third calculation formula is specifically embodied as follows:

$$U_{bat} = U_0 + \Delta U$$

where $U_{bat}$ is the actual voltage value.

Specifically, during determination of the battery 10 power, due to the inner resistance $R_{bat}$ of a charge and discharge circuit, when the battery 10 is on-load, if the battery terminal voltage is directly sampled, there is a floating voltage $\Delta U$, and the actual voltage $U_{bat}$ of the battery 10 cannot be accurately sampled. Therefore, it is necessary to measure the floating voltage of the circuit on the basis of directly measuring the battery terminal voltage, so as to calculate backward to figure out the actual voltage $U_{bat}$ of the battery 10. Since the charging current of the battery 10 is constant, the MCU 20 can calculate the floating voltage according to the current parameters preset by a charging IC during the charging process.

S4, calculating, according to the actual voltage value and the floating voltage value, the battery remaining capacity, and adjusting the final power supply output of the device based on the remaining capacity.

As a preferred embodiment, the step S4 specifically includes:

S4a, calculating the positive correlation between the actual voltage value $U_{bat}$ and the floating voltage value $\Delta U$;

S4b, determining, according to the positive correlation, the battery remaining capacity; and

S4c, converting the remaining capacity into the final power supply output of the circuit according to a set proportion.

According to the battery discharge control method provided by the embodiment of the present disclosure, the output of the battery 10 is enabled to follow the natural discharge curve of the lithium battery, so that the voltage change process of the battery 10 becomes more linear; and furthermore, the voltage of the battery 10 can be detected by the MCU 20 during the charge and discharge processes, and thus the actual remaining capacity of the battery 10 can be more accurately quantified. In addition, there will be no cliff like power failure during the discharge process of the battery 10, so that the electricity user experience is optimized. Even for the electrical equipment without an MCU, the actual battery power of the battery 10 can be detected by the MCU 20 built in the battery 10, so that the remaining capacity can be correctly determined, the battery 10 can be replaced in time, and the electricity user experience can be optimized.

The present disclosure controls the output of the DC-DC voltage step-down unit 40 according to the battery remaining capacity, and therefore, by adjusting the final power supply output of the device, the power supply output of the battery 10 changes with the discharge trend of the lithium battery, electrical equipment can be enabled to obtain stable input, and the battery power can be accurately quantified, which solves the problem that non-linearly changing output voltage attenuation process of dry batteries in the prior art leads to unstable power supply for electrical equipment and inability to accurately quantify battery power, thus making the output of power supply equipment more linear.

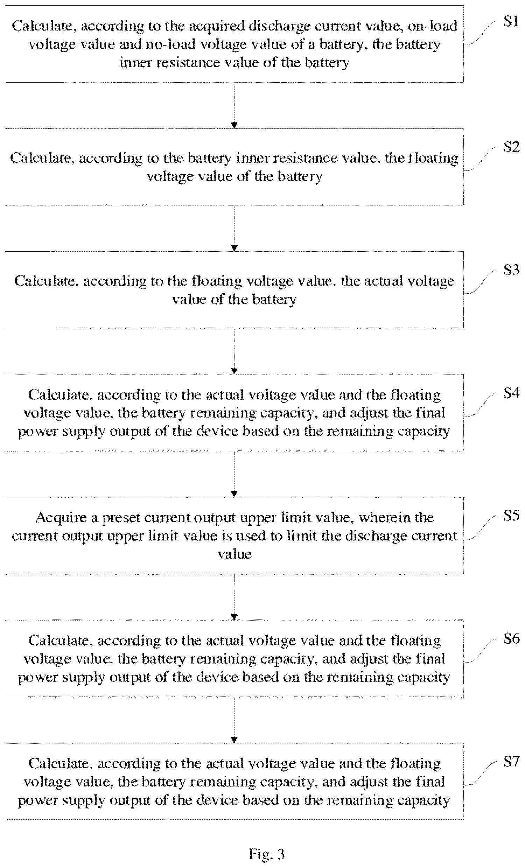

Fig. 3 is a flow chart of a battery discharge control method provided by another embodiment of the present disclosure. Referring to Fig. 3, after the step S4, the battery discharge control method provided by the embodiment of the present disclosure also includes:

S5, acquiring a preset current output upper limit value, the current output upper limit value being used to limit the discharge current value; and

S6, when the difference between the discharge current value and the current output upper limit value is less than the first set threshold, determining that the discharge current value is approaching the current output upper limit value, and decreasing the voltage value of the final power supply output.

As a preferred embodiment, the step S6 specifically includes:

S6a, when the difference between the discharge current value and the current output upper limit value is less than the first set threshold, acquiring the cumulative time during which the difference is less than the first set threshold.

Specifically, when the MCU 20 determines that the difference between the discharge current value of the battery and the current output upper limit value is less than the first set threshold, the cumulative time during which the difference is less than the first set threshold is acquired.

S6b, when the cumulative time exceeds the second set threshold, determining that the discharge current value is approaching the current output upper limit value, and reducing the output voltage of the DC-DC voltage step-down unit, so as to decrease the voltage value of the final power supply output, and further prevent the device and electrical equipment from being overheated.

S7, when the discharge current value exceeds the current output upper limit value, stopping the final power supply output.

Specifically, when the MCU 20 determines that the discharge current value of the battery exceeds the preset current upper limit, the DC-DC voltage step-down unit 40 is turned off to cut off the power supply output.

In a preferred embodiment of the present disclosure, the battery discharge control method further includes: controlling the battery discharge control device to enter a low-power mode when the MCU detects the load access state and determines that the load is removed according to the battery discharge current, so as to save standby energy consumption. In this embodiment, the MCU detects whether the load is connected at regular intervals to maintain the battery output voltage.

The above-mentioned embodiments only express several embodiments of the present disclosure, and the descriptions thereof are more specific and detailed, but it should not be construed as limiting the scope of the present disclosure. It should be noted that, for those of ordinary skill in the art, some variations and improvements without departing from the concept of the present disclosure can also be made, which shall also be regarded as the protection scope of the present disclosure. Therefore, the scope of protection of the present disclosure should be subject to the appended claims.

Finally, it should be noted that the above embodiments are only used to illustrate the technical solutions of the present disclosure, but not to limit them. Although the present disclosure has been described in detail with reference to the aforementioned embodiments, those of ordinary skill in the art should understand that they can still modify the technical solutions described in the aforementioned embodiments, or equivalently replace some of the technical features therein. These modifications or replacements shall not make the essence of the corresponding technical solutions depart from the spirit and scope of the technical solutions of the various embodiments of the present disclosure.

**Claims**

1. A battery discharge control device, comprising:

   a battery, connected to an Microcontroller Unit (MCU) and a Direct Current to Direct Current (DC-DC) voltage step-down unit separately, for outputting electrical energy;
   a discharge current sampling unit, connected to the MCU, for acquiring the discharge current value, on-load voltage value and no-load voltage value of the battery and transmitting same to the MCU;
   the MCU, used for calculating the battery remaining capacity according to the discharge current value, on-load voltage value and no-load voltage value, and sending a power supply adjustment signal according to the remaining capacity; and
   the DC-DC voltage step-down unit, connected to the battery and the MCU separately, for adjusting the final power supply output of the device according to the power supply adjustment signal sent by the MCU.

2. The battery discharge control device according to claim 1, further comprising a battery protection board, wherein one end of the battery protection board is connected to the battery, and the other end of the battery protection board is connected to the DC-DC voltage step-down unit.

3. The battery discharge control device according to claim 1, further comprising an indicator light and a charging control unit, wherein the indicator light is connected to the MCU for indicating the battery power, one end of the charging control unit is connected to the battery protection board, and the other end of the charging control unit is connected to the MCU for controlling the charging of the battery.

4. A battery discharge control method for the battery discharge control device according to any one of claims 1-3, comprising:

   S1, calculating, according to the acquired discharge current value, on-load voltage value and no-load voltage value of the battery, the battery inner resistance value of the battery;
   S2, calculating, according to the battery inner resistance value, the floating voltage value of the battery;
   S3, calculating, according to the floating voltage value, the actual voltage value of the battery; and
   S4, calculating, according to the actual voltage value and the floating voltage value, the battery remaining capacity, and adjusting the final power supply output of the device based on the remaining capacity.

5. The battery discharge control method according to claim 4, wherein the step S1 specifically comprises:

   S1a, acquiring the discharge current value $I_{bat}$, on-load voltage value $U_0$ and no-load voltage value $U_1$ of the battery; and
   S1b, inputting the discharge current value $I_{bat}$, on-load voltage value $U_0$ and no-load voltage value $U_1$ into the set first calculation formula to calculate the battery inner resistance value, with the first calculation formula being:

$$R_{bat} = \frac{U_1 - U_0}{I_{bat}}$$

   wherein $R_{bat}$ is the battery inner resistance value.

6. The battery discharge control method according to claim 5, wherein the step S2 specifically comprises:

   S2a, inputting the battery inner resistance value $R_{bat}$ and discharge current value $I_{bat}$ into the set second calculation formula to calculate the floating voltage value, with the second calculation

**EP 4 657 705 A1**

formula being:

$$\Delta U = R_{bat} \times I_{bat}$$

wherein ΔU is the floating voltage value of the battery.

7. The battery discharge control method according to claim 6, wherein the step S3 specifically comprises:

S3a, inputting the on-load voltage value $U_0$ and floating voltage value ΔU into the set third calculation formula to calculate the actual voltage value, with the third calculation formula being specifically embodied as follows:

$$U_{bat} = U_0 + \Delta U$$

wherein $U_{bat}$ is the actual voltage value.

8. The battery discharge control method according to claim 7, wherein the step S4 specifically comprises:

S4a, calculating the positive correlation between the actual voltage value $U_{bat}$ and the floating voltage value ΔU;
S4b, determining, according to the positive correlation, the battery remaining capacity; and
S4c, converting the remaining capacity into the final power supply output of the circuit according to a set proportion.

9. The battery discharge control method according to claim 5, wherein after the step S4, the method further comprises:

S5, acquiring a preset current output upper limit value, the current output upper limit value being used to limit the discharge current value;
S6, when the difference between the discharge current value and the current output upper limit value is less than the first set threshold, determining that the discharge current value is approaching the current output upper limit value, and decreasing the voltage value of the final power supply output; and
S7, when the discharge current value exceeds the current output upper limit value, stopping the final power supply output.

10. The battery discharge control method according to claim 9, wherein the step S6 specifically comprises:

S6a, when the difference between the discharge current value and the current output upper limit value is less than the first set threshold, acquiring the cumulative time during which the difference is less than the first set threshold; and
S6b, when the cumulative time exceeds the second set threshold, determining that the discharge current value is approaching the current output upper limit value, and reducing the output voltage of the DC-DC voltage step-down unit, so as to decrease the voltage value of the final power supply output, and further prevent the device and electrical equipment from being overheated.

10

Battery

Charge and discharge

50

Battery protection board

Power supply

40

DC-DC voltage step-down unit

Power supply

70

Charging control unit

20

MCU

Charging signal

Enable

pwm or dac control

60

Display signal

Indicator light

30

Discharge current sampling unit

Fig. 1

Calculate, according to the acquired discharge current value, on-load voltage value and no-load voltage value of a battery, the battery inner resistance value of the battery    S1

Calculate, according to the battery inner resistance value, the floating voltage value of the battery    S2

Calculate, according to the floating voltage value, the actual voltage value of the battery    S3

Calculate, according to the actual voltage value and the floating voltage value, the battery remaining capacity, and adjust the final power supply output of the device based on the remaining capacity    S4

Fig. 2

Calculate, according to the acquired discharge current value, on-load voltage value and no-load voltage value of a battery, the battery inner resistance value of the battery — S1

Calculate, according to the battery inner resistance value, the floating voltage value of the battery — S2

Calculate, according to the floating voltage value, the actual voltage value of the battery — S3

Calculate, according to the actual voltage value and the floating voltage value, the battery remaining capacity, and adjust the final power supply output of the device based on the remaining capacity — S4

Acquire a preset current output upper limit value, wherein the current output upper limit value is used to limit the discharge current value — S5

Calculate, according to the actual voltage value and the floating voltage value, the battery remaining capacity, and adjust the final power supply output of the device based on the remaining capacity — S6

Calculate, according to the actual voltage value and the floating voltage value, the battery remaining capacity, and adjust the final power supply output of the device based on the remaining capacity — S7

Fig. 3

Europäisches
Patentamt

European
Patent Office

Office européen
des brevets

# EUROPEAN SEARCH REPORT

**Application Number**

EP 24 19 6454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/013729 A1 (CHOU CHUNG-FU [TW]) 14 January 2021 (2021-01-14) * paragraph [0003] - paragraph [0009] * * paragraph [0026] - paragraph [0048]; figure 1 * * paragraph [0061] * | 1-10 | INV. H02J7/00 H01M10/44 H01M10/48 |
| X | WO 2023/111339 A1 (NYOBOLT LTD [GB]) 22 June 2023 (2023-06-22) * page 13, line 34 - page 17, line 3 * * page 22, line 11 - line 14 * * page 31, line 10 - line 18 * * page 47, line 33 - page 50, line 7; figures 1a-3b * * page 57, line 5 - line 15; figure 7c * | 1-10 | |
| X | CN 114 726 022 A (SHENZHEN DONGFANG XINYUAN NEW ENERGY CO LTD) 8 July 2022 (2022-07-08) * paragraph [0006] - paragraph [0021] * * paragraph [0027] - paragraph [0036]; figures 1,2 * | 1-10 | |
| X | US 2008/238372 A1 (CINTRA GEORGE M [US] ET AL) 2 October 2008 (2008-10-02) * paragraph [0047]; figure 4 * * paragraph [0055] - paragraph [0064]; figures 4,5 * | 1-10 | TECHNICAL FIELDS SEARCHED (IPC) H02J H01M |
| X | US 2002/001745 A1 (GARTSTEIN VLADIMIR [US] ET AL) 3 January 2002 (2002-01-03) * paragraph [0009] - paragraph [0012] * * paragraph [0098] - paragraph [0131]; figures 7-13 * | 1-10 | |

The present search report has been drawn up for all claims

| Place of search | Date of completion of the search | Examiner |
|---|---|---|
| Munich | 23 January 2025 | Mäki-Mantila, Harri |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 6454

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2025

| Patent document cited in search report | | Publication date | Patent family member(s) | | Publication date |
|---|---|---|---|---|---|
| US 2021013729 A1 | | 14-01-2021 | NONE | | |
| WO 2023111339 A1 | | 22-06-2023 | EP | 4449578 A1 | 23-10-2024 |
| | | | GB | 2615640 A | 16-08-2023 |
| | | | JP | 2024546958 A | 26-12-2024 |
| | | | KR | 20240125960 A | 20-08-2024 |
| | | | WO | 2023111339 A1 | 22-06-2023 |
| CN 114726022 A | | 08-07-2022 | NONE | | |
| US 2008238372 A1 | | 02-10-2008 | BR | PI0809333 A2 | 09-09-2014 |
| | | | CN | 103000953 A | 27-03-2013 |
| | | | EP | 2130253 A1 | 09-12-2009 |
| | | | JP | 5242668 B2 | 24-07-2013 |
| | | | JP | 2010522963 A | 08-07-2010 |
| | | | US | 2008238372 A1 | 02-10-2008 |
| | | | US | 2012139501 A1 | 07-06-2012 |
| | | | WO | 2008118477 A1 | 02-10-2008 |
| US 2002001745 A1 | | 03-01-2002 | AR | 015260 A1 | 18-04-2001 |
| | | | AU | 751745 B2 | 29-08-2002 |
| | | | BR | 9910111 A | 05-03-2002 |
| | | | CA | 2326702 A1 | 14-10-1999 |
| | | | CN | 1303524 A | 11-07-2001 |
| | | | EP | 1066658 A1 | 10-01-2001 |
| | | | ID | 26901 A | 15-02-2001 |
| | | | IL | 138699 A | 01-06-2004 |
| | | | JP | 2002510850 A | 09-04-2002 |
| | | | KR | 20010042432 A | 25-05-2001 |
| | | | MX | PA00009690 A | 08-09-2005 |
| | | | PE | 20000714 A1 | 15-08-2000 |
| | | | PL | 343550 A1 | 27-08-2001 |
| | | | RU | 2242065 C2 | 10-12-2004 |
| | | | SK | 14692000 A3 | 11-06-2001 |
| | | | TR | 200003615 T2 | 21-06-2001 |
| | | | TW | 417327 B | 01-01-2001 |
| | | | US | 2002001745 A1 | 03-01-2002 |
| | | | WO | 9952163 A1 | 14-10-1999 |
| | | | ZA | 200005269 B | 02-08-2001 |

EPO FORM P0459

For more details about this annex : see Official Journal of the European Patent Office, No. 12/82

**EP 4 657 705 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210200743